# EUROPEAN PATENT SPECIFICATION

(11) **EP 0 584 105 B1**
(45) Date of publication and mention of the grant of the patent: **27.11.1996**
(21) Application number: 92909163.5
(22) Date of filing: 27.04.1992
(51) Int. Cl.: A01K 11/00, G09F 3/08

(54) **TAG ASSEMBLIES**
MARKENANORDNUNGEN
ENSEMBLE D'ETIQUETTAGE

(30) Priority: 14.05.1991 NL 9100836; 27.09.1991 GB 9120530
(43) Date of publication of application: 02.03.1994
(73) Proprietor: Sterimatic Holdings Limited, Stroud, Gloucestershire GL6 8QN (GB)
(72) Inventor: PARRY, John Stewart, Stroud, Gloucestershire GL6 8QN (GB)
(74) Representative: Harding, Richard Patrick
(86) International application number: GB9200772
(87) International publication number: WO9220221

(56) References cited:
- GB-A- 841 186
- US-A- 1 666 820
- US-A- 4 579 085

## Description

This invention relates to tag assemblies for tagging livestock.

It is a widespread practice for farmers to tag livestock, particularly cattle, with tag assemblies as a means of identification, and additionally for other purposes, for example to apply an insecticide or insect repellent to the animal. A conventional tag assembly for this purpose comprises a male tag part having a shaft which is passed through the animal's ear and is then locked in a receiving well in a female tag part. Once inserted in the receiving well the shaft cannot be withdrawn, and the tag assembly can only be removed from the animal's ear by cutting.

EP 0208402 discloses a tag assembly of this general type in which the female tag part has an attachment portion for attaching a detachable tag member to the assembly after the assembly has been fitted to the animal. This enables one or more such further tag members to be attached to the assembly for a specific purpose, and to be subsequently detached if required, whilst avoiding the necessity to replace the complete tag assembly with a new tag assembly which is costly and also disturbing for the animal. However such an arrangement requires use of a female tag part which is specifically adapted to receive the detachable tag member, and there are many circumstances in which it will be desired to fit a further tag part to an existing tag assembly not having a female tag part so adapted.

It is an object of the invention to provide a tag member which is capable of being fitted to existing tag assemblies of conventional type. A tag member capable of being so fitted is known, for example, from US-A-4579085.

According to the present invention, there is provided a tag assembly for tagging livestock comprising a tag part, and a connecting shaft adapted to extend through a part of the animal to be tagged so as to connect said tag part to the animal, in combination with an auxiliary tag member having a laminar body for connection to said tag assembly, the auxiliary tag member including a connecting portion having an aperture extending therethrough, characterised in that said aperture includes a slot permitting said auxiliary tag member to be detachably connected to said tag assembly by introducing the connecting shaft of said tag assembly into the aperture while the tag assembly is connected to the animal.

Such a tag member is capable of being attached to an existing tag assembly which is already attached to the animal, and requires no special adaptation of the tag assembly to permit such attachment since the tag member is attached to the connecting shaft. Since the connecting shaft is provided in practice for attachment of the tag assembly to the animal and not for the purpose of attaching an auxiliary tag member, the tag member is capable of being attached to a tag assembly of conventional type having no special adaptation for this purpose. The addition of the tag member to the assembly may, for example, permit insect repelling properties to be imparted to an existing tag assembly of conventional type.

In one embodiment of the invention the connecting portion is of such a form as to enable it to be attached to the connecting in such a manner that the body is positioned between the part of the animal to which the tag assembly is attached and the tag part of the tag assembly.

In this case it is preferred that the connecting portion includes a closed slot in the body permitting the tag part to be passed through the slot during attachment of the tag member to the tag assembly. The laminar tag part may be sufficiently flexible to permit it to be folded over on itself before being passed through the slot.

Alternatively the connecting portion may include an open slot in the body extending between the aperture and an edge of the body to permit the connecting shaft to be introduced into the aperture from said edge by way of the slot.

In either alternative it is advantageous if the connecting portion includes an annular deformable region surrounding the aperture to assist in introduction of the connecting shaft into the aperture.

In order that the invention may be more fully understood, reference will now be made, by way of example, to the accompanying drawings, in which:
Figure 1 shows a conventional ear tag assembly and a first form of tag member according to the invention for fitting to such an assembly;
Figure 2 shows a second form of tag member according to the invention for fitting to such an assembly; and
Figures 3, 4 and 5 show successive stages in the fitting of a third form of tag member according to the invention to such an assembly.

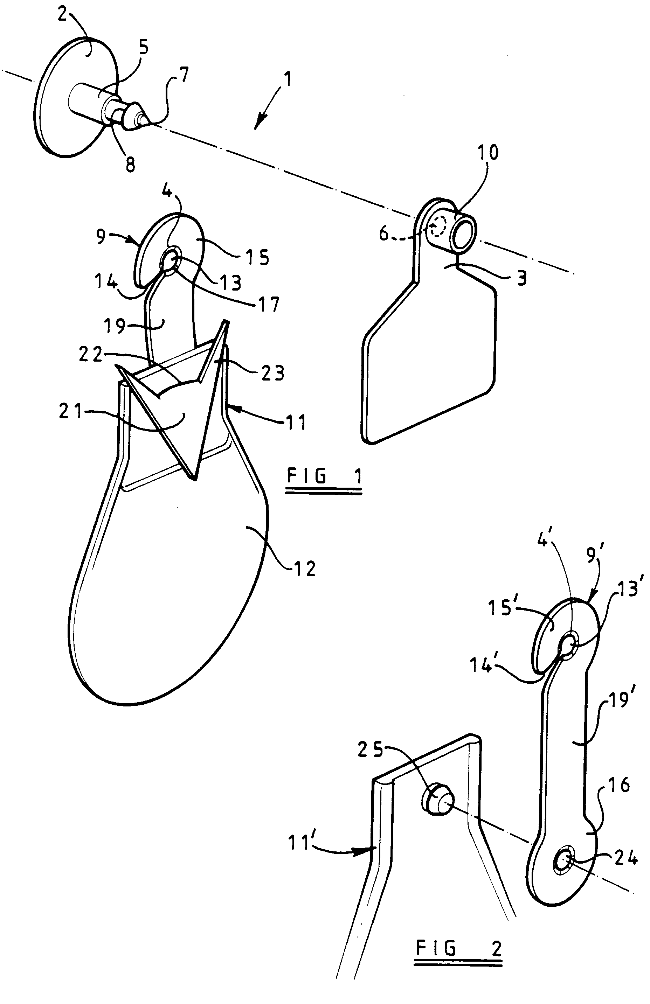

Referring to Figure 1, the illustrated ear tag assembly 1 is of conventional form and will accordingly only be described in outline. The assembly 1 comprises plastics male and female tag parts 2 and 3 intended to be disposed on opposite sides of the animal's ear and to be held together by a connecting shaft 5 of the male tag part 2 having a metal tip 7 which is passed through a hole in the ear and is a force fit in a receiving well 10 of the female tag part 3. Once the metal tip 7 has entered the well 10 by way of an aperture 6 at the base of the well 10, a shoulder 8 on the tip 7 prevents the tip 7 from being withdrawn from the well 10.

A further tag member 9 is adapted to be attached to the tag assembly 1 after it has been fitted to the animal's ear, and to this end the further tag member 9 has a laminar body part 15 having a connecting portion 4 comprising an aperture 13 and an open slot 14 extending between the aperture 13 and an edge of the body part 15. The slot 14 permits the tag member 9 to be hooked over the connecting shaft 5 so that the shaft 5 may be introduced into the aperture 13 with a snap action by way of the slot 14. To permit such a snap action the further tag member 9 is made of flexible plastics material, and an annular deformable region 17 provided with radial slits surrounds the aperture 13.

Furthermore the body part 15 of the tag member 9 has a laminar extension 19 in the plane of the body part 15 forming an attachment portion by means of which an attachment member 11, made for example of plastics material impregnated with an insecticide, may be detachably attached to the tag assembly. The laminar extension 19 has an arrow-shaped head 21 also in the plane of the body part 15, and the attachment member 11 has a resiliently deformable laminar body 12 formed with a curved slot 22 through which the head 21 may be forced with the diverging lateral edges of the head 21 serving to resiliently deform the material surrounding the slot 22. When the head 21 has passed through the slot 22, two barbs 23 disposed one on each side of the head 21 engage the body 12 on each side of the slot 22 to prevent the head 21 from being subsequently withdrawn through the slot 22.

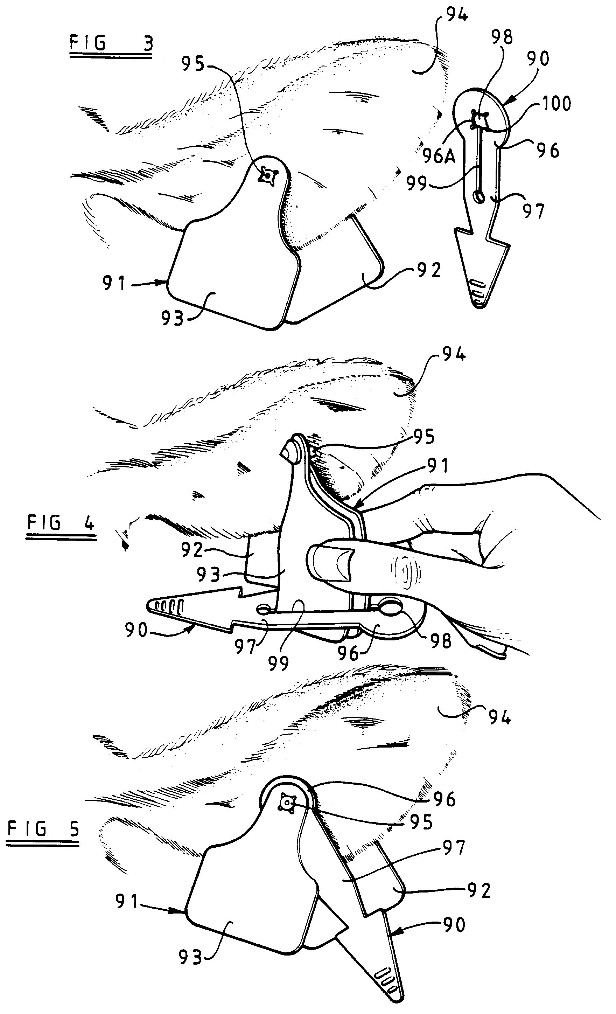

In an alternative embodiment of the invention, shown in Figure 2, the further tag member 9' has a connecting portion 4' comprising an aperture 13' and an open slot 14' in its body part 15' as in the previously described embodiment, but in this case the laminar extension 19' is formed at its other end with an enlarged portion 16 having an orifice 24 permitting detachable attachment of an attachment member 11' thereto by snap fitting of a projection 25 into the orifice 24.

Another embodiment of the invention is shown in Figures 3, 4 and 5 which illustrate three successive stages in the fitting of the further tag member 90 to an existing tag assembly 91 having male and female tag parts 92 and 93 attached to the animal's ear 94 by a connecting shaft 95. The tag assembly 91 is substantially of the same form as the tag assembly 1 shown in Figure 1 except that it does not include a receiving well for the metal tip of the connecting shaft 95.

As may be seen clearly in Figure 3, which shows the further tag member 90 detached from the tag assembly 91, the tag member 90 has a laminar body part 96 with a laminar extension 97 of generally similar form to the laminar extension 19 of Figure 1. However, for attachment of the tag member 90 to the tag assembly 91, the body part 96 has a connecting portion 96A comprising an aperture 98 and an adjoining closed slot 99.

As is shown clearly in Figure 4, the tag member 90 is fitted to the tag assembly 91 by folding the female tag part 93 over on itself and passing it through the slot 99 until the tag member 90 is positioned between the animal's ear 94 and the female tag part 93 with the shaft 95 extending through the aperture 98 in the final fitted position shown in Figure 5. The body part 96 is provided with radial slits forming an annular deformable region 100 around the aperture 98 to assist gripping of the shaft 95. Of course the laminar extension 97 of the tag member 90 may alternatively have the form shown in Figure 2.

It should be understood that other variants of the further tag member are possible within the scope of the invention indicated by the appended claims. In particular the complementary attachment portions provided on the further tag member and the attachment member may be varied considerably, and, where one of the attachment portions is in the form of an aperture, the aperture may be provided either in the further tag member or in the attachment member. Furthermore the further tag member may itself constitute the attachment member provided for insecticide purposes or otherwise, in which case the further tag member does not need to have an attachment portion for coupling of a separate attachment member thereto.

## Claims

1. A tag assembly (1, 91) for tagging livestock comprising a tag part (3, 93), and a connecting shaft (5, 95) adapted to extend through a part of the animal to be tagged so as to connect said tag part (3, 93) to the animal, in combination with an auxiliary tag member (9, 9', 90) having a laminar body (15, 15', 96) for connection to said tag assembly, the auxiliary tag member including a connecting portion (4, 4', 96A) having an aperture (13, 13', 98) extending therethrough, characterised in that said aperture includes a slot (14, 14', 99) permitting said auxiliary tag member to be detachably connected to said tag assembly by introducing the connecting shaft (5, 95) of said tag assembly into the aperture while the tag assembly is connected to the animal.

2. A tag assembly according to Claim 1, wherein the tag member (9, 9', 90) has a portion intended to be disposed above the connecting shaft (5, 95) when the tag member (9, 9', 90) is suspended from the connecting shaft so as to prevent the tag member being pulled off the connecting shaft by a downward pulling force.

3. A tag assembly according to Claim 1 or 2, wherein the connecting portion (4, 4', 96A) is of such a form as to enable it to be connected to the connecting shaft (9, 95) in such a manner that the body (15, 15' 96) is positioned between the part of the animal to be tagged and the tag part (3, 93).

4. A tag assembly according to Claim 3, wherein the connecting portion (96A) includes a closed slot (99) in the body (96) permitting the tag part (3, 93) to be passed through the slot (99) during connection of the tag member (90) to the assembly.

5. A tag assembly according to Claim 3, wherein the connecting portion (4, 4') includes an open slot (14, 14') in the body (15, 15') extending between the aperture (13, 13') and an edge of the body (15, 15') to permit the connecting shaft (5) to be introduced into the aperture (13, 13') from said edge by way of the slot (14, 14').

6. A tag assembly according to any preceding claim, wherein the connecting portion (4, 4', 96A) includes an annular deformable region (17, 100) surrounding the aperture (13, 13', 98) to assist in introduction of the connecting shaft (5, 95) into the aperture (13, 13', 98).

7. A tag assembly according to Claim 6, wherein the annular deformable region (17, 100) includes radial slits extending outwardly from the aperture (13, 13', 98).

8. A tag assembly according to any preceding claim, which further includes an attachment portion (19, 21; 19', 16; 97) for attaching a detachable member (11, 11') to a part of the tag member (9, 9', 90) spaced from the connecting portion (4, 4', 96A).

9. A tag assembly according to Claim 8, wherein the attachment portion is in the form of a laminar extension (19, 97) in the plane of the body (15, 96) having a head (21) also in the plane of the body and adapted to be forced through an orifice (22) in the attachment member (11) to attach the attachment member to the tag member.

10. A tag assembly according to Claim 8, wherein the attachment portion is in the form of a laminar extension (19') in the plane of the body (15') having a portion (16) defining an orifice (24) through which a projection (25) on the attachment member (11') may be forced to attach the attachment member to the tag member.

## Patentansprüche

1. Anhängereinheit (1, 91), um Vieh zu markieren, mit einem Anhängerteil (3, 93), und einem Verbindungsschaft (5, 95), der ausgelegt ist, um so durch einen Teil des zu markierenden Tiers geführt zu werden, daß der Anhängerteil (3, 93) mit dem Tier verbunden wird, in Kombination mit einem Hilfsanhängerelement (9, 9', 90), das einen flächenförmigen Körper (15, 15', 96) hat, zur Verbindung mit der Anhängereinheit, wobei das Hilfsanhängerelement einen Verbindungsbereich (4, 4', 96A) umfaßt, der eine sich dadurch erstreckende Öffnung (13, 13', 98) hat, dadurch gekennzeichnet, daß die Öffnung einen Schlitz (14, 14', 99) umfaßt, um das Hilfsanhängerelement mit der Anhängereinheit abnehmbar verbinden zu können, wozu der Verbindungsschaft (5, 95) der Anhängereinheit in die Öffnung eingeführt wird, während die Anhängereinheit mit dem Tier verbunden ist.

2. Anhängereinheit gemäß Anspruch 1, wobei das Anhängerelement (9, 9', 90) einen Bereich hat, der dazu bestimmt ist, über dem Verbindungsschaft (5, 95) angeordnet zu werden, wenn das Anhängerelement (9, 9', 90) an dem Verbindungsschaft aufgehängt ist, so daß verhindert wird, daß das Anhängerelement durch eine nach unten gerichtete Kraft von dem Verbindungsschaft abgezogen wird.

3. Anhängereinheit gemäß Anspruch 1 oder 2, wobei der Verbindungsbereich (4, 4', 96A) eine solche Form hat, daß er mit dem Verbindungsschaft (5, 95) derart verbunden werden kann, daß der Körper (15, 15', 96) zwischen dem Teil des zu markierenden Tieres und dem Anhängerteil (3, 93) angeordnet ist.

4. Anhängereinheit gemäß Anspruch 3, wobei der Verbindungsbereich (96A) einen geschlossenen Schlitz (99) in dem Körper (96) umfaßt, um beim Verbinden des Anhängerelements (90) mit der Anhängereinheit den Anhängerteil (3, 93) durch den Schlitz (99) schieben zu können.

5. Anhängereinheit gemäß Anspruch 3, wobei der Verbindungsbereich (4, 4') einen offenen Schlitz (14, 14') in dem Körper (15, 15') umfaßt, der sich zwischen der Öffnung (13, 13') und einem Rand des Körpers (15, 15') erstreckt, um den Verbindungsschaft (5) von dem Rand über den Schlitz (14, 14') in die Öffnung (13, 13') einführen zu können.

6. Anhängereinheit gemäß irgendeinem vorhergehenden Anspruch, wobei der Verbindungsbereich (4, 4', 96A) ein die Öffnung (13, 13', 98) umgebendes, ringförmiges, verformbares Gebiet (17, 100) umfaßt, um die Einführung des Verbindungsschaftes (5, 95) in die Öffnung (13, 13', 98) zu erleichtern.

7. Anhängereinheit gemäß Anspruch 6, wobei das ringförmige, verformbare Gebiet (17, 100) radiale Schlitze umfaßt, die sich von der Öffnung (13, 13', 98) nach außen erstrecken.

8. Anhängereinheit gemäß irgendeinem vorhergehenden Anspruch, die weiterhin einen Befestigungsbereich (19, 21; 19', 16; 97) umfaßt, um ein abnehmbares Zusatzelement (11, 11') an einem Teil des Anhängerelements (9, 9', 90) zu befestigen, der einen gewissen Abstand von dem Verbindungsbereich (4, 4', 96A) hat.

9. Anhängereinheit gemäß Anspruch 8, wobei der Befestigungsbereich die Form einer flächenförmigen Verlängerung (19, 97) in der Ebene des Körpers (15, 96) hat, mit einem Kopf (21), der ebenfalls in der Ebene des Körpers liegt, und ausgelegt ist, um durch eine Öffnung (22) in dem Zusatzelement (11) gezwängt zu werden, um das Zusatzelement an dem Anhängerelement zu befestigen.

10. Anhängereinheit gemäß Anspruch 8, wobei der Befestigungsbereich die Form einer fläuchenförmigen Verlängerung (19') in der Ebene des Körpers (15') hat, mit einem Bereich (16), der eine Öffnung (24) hat, durch die ein Vorsprung (25) des Zusatzelements (11') gezwängt werden kann, um das Zusatzelement an dem Anhängerelement zu befestigen.

## Revendications

1. Assemblage d'étiquetage (1, 91) pour l'étiquetage de bétail, comprenant une partie d'étiquetage (3, 93) et un arbre de connexion (5, 95), destiné à s'étendre à travers une partie de l'animal devant être étiquetée, de sorte à connecter ladite partie d'étiquetage (3, 93) à l'animal, en combinaison avec un élément d'étiquetage auxiliaire (9, 9', 90) ayant un corps lamellaire (15, 15', 96) en vue de la connexion audit assemblage d'étiquetage, l'élément d'étiquetage auxiliaire englobant une partie de connexion (4, 4', 96A) avec une ouverture (13, 13', 98) qui le traverse, caractérisé en ce que ladite ouverture englobe une fente (14, 14', 99), permettant la connexion amovible dudit élément d'étiquetage auxiliaire audit assemblage d'étiquetage par introduction de l'arbre de connexion (5, 95) dudit assemblage d'étiquetage dans l'ouverture, l'assemblage d'étiquetage étant connecté à l'animal.

2. Assemblage d'étiquetage selon la revendication 1, dans lequel l'élément d'étiquetage (9, 9', 90) comporte une partie destinée à être agencée au-dessus de l'arbre de connexion (5, 95) lorsque l'élément d'ét-quetage (9, 9', 90) est suspendu à l'arbre de connexion, de sorte à empêcher un arrachement de l'élément d'étiquetage de l'arbre de connexion par une force de traction orientée vers le bas.

3. Assemblage d'étiquetage selon les revendications 1 ou 2, dans lequel la partie de connexion (4, 4', 96A) a une forme telle à permettre sa connexion à l'arbre de connexion (9, 95), de façon que le corps (15, 15', 96) est positionné entre la partie de l'animal devant être étiquetée et la partie d'étiquetage (3, 93).

4. Assemblage d'étiquetage selon la revendication 3, dans lequel la partie de connexion (96A) englobe une fente fermée (99) dans le corps (96), permettant à la partie d'étiquetage (3, 93) de traverser la fente (99) au cours de la connexion de l'élément d'étiquetage (90) à l'assemblage.

5. Assemblage d'étiquetage selon la revendication 3, dans lequel la partie de connexion (4, 4') englobe une fente ouverte (14, 14') dans le corps (15, 15'), s'étendant entre l'ouverture (13, 13') et un bord du corps (15, 15') pour permettre l'introduction de l'arbre de connexion (5) dans l'ouverture (13, 13') à partir dudit bord par l'intermédiaire de la fente (14, 14').

6. Assemblage d'étiquetage selon l'une quelconque des revendications précédentes, dans lequel la partie de connexion (4, 4', 96A) englobe une région à déformation annulaire (17, 100) entourant l'ouverture (13, 13', 98) pour faciliter l'introduction de l'arbre de connexion (5, 95) dans l'ouverture (13, 13', 98).

7. Assemblage d'étiquetage selon la revendication 6, dans lequel la région à déformation annulaire (17, 100) englobe des fentes radiales s'étendant vers l'extérieur à partir de l'ouverture (13, 13', 98).

8. Assemblage d'étiquetage selon l'une quelconque des revendications précédentes, englobant en outre une partie de fixation (19, 21; 19', 16; 97) pour fixer un élément amovible (11, 11') à une partie de l'élément d'étiquetage (9, 9', 90) espacée de la partie de connexion (4, 4', 96A).

9. Assemblage d'étiquetage selon la revendication 8, dans lequel la partie de fixation a la forme d'une extension lamellaire (19, 97) dans le plan du corps (15, 96), avec une tête (21), également dans le plan du corps et destinée à être poussée à travers un orifice (22) dans l'élément de fixation (11) pour fixer l'élément de fixation à l'élément d'étiquetage.

10. Assemblage d'étiquetage selon la revendication 8, dans lequel la partie de fixation a la forme d'une extension lamellaire (19') dans le plan du corps (15'), avec une partie (16) définissant un orifice (24) à travers lequel peut être poussée une saillie (25) de l'élément de fixation (11') pour fixer l'élément de fixation à l'élément d'étiquetage.
